# EUROPÄISCHE PATENTSCHRIFT

(11) **EP 4 369 918 B1**
(45) Veröffentlichungstag und Bekanntmachung des Hinweises auf die Patenterteilung: **23.10.2024**
(21) Anmeldenummer: 22741522.1
(22) Anmeldetag: 12.07.2022
(51) Int. Cl.: A01K 13/00

(54) **NUTZTIERBÜRSTENHALTERUNG MIT NUTZTIERBÜRSTE**
COW BRUSH HOLDER WITH COW BRUSH
PORTE-BROSSE POUR VACHES POURVU DE BROSSES POUR VACHES

(30) Priorität: 14.07.2021 EP 21185486
(43) Veröffentlichungstag der Anmeldung: 22.05.2024
(73) Patentinhaber: Hunkeler, Peter, 6036 Dierikon (CH)
(72) Erfinder: Hunkeler, Peter, 6036 Dierikon (CH)
(74) Vertreter: Koelliker, Robert
(86) Internationale Anmeldenummer: PCT/EP2022/069403
(87) Internationale Veröffentlichungsnummer: WO 2023/285433

(56) Entgegenhaltungen:
- EP-A1- 0 287 176
- DE-A1- 102018 131 634
- DE-U1- 202012 100 828
- DE-U1- 29 609 477
- DE-U1- 29 609 477
- FR-A1- 2 159 370
- KR-Y1- 200 200 090
- KR-Y1- 200 200 090
- US-A1- 2009 095 228

## Beschreibung

Die vorliegende Erfindung bezieht sich auf eine Nutztierbürstenhalterung mit Nutztierbürste für die Selbst- und Trockenreinigung von Hals und/oder Bauch von Nutztieren, sowie deren Verwendung.

Unter Nutztierbürsten werden Bürsten verstanden, welche in der landwirtschaftlichen Viehhaltung an geeigneter Stelle angebracht werden, damit sich die für die Milch- und/oder Fleischproduktion gehaltenen Tiere selbständig, d.h. ohne Zutun von Menschen, an den Bürsten reiben und somit auch reinigen können.

Versuche haben gezeigt, dass die Tiere die Nutztierbürsten selbständig gerne benutzen. Dabei nutzen schon 2 Wochen alte Kälber Kälberbürsten täglich. Das Scheuern an den Bürsten erhöht das Wohlbefinden der Tiere und spielt für die Fellpflege, was eine natürliche Verhaltensweise ist, eine wichtige Rolle. So ist die natürliche Funktion des Scheuerns Körperpflege und schliesst Reinigung und Hygiene mit ein. Es hilft den Tieren, Staub, Dreck, Kot, Urin, Insekten und Parasiten von ihrem Fell zu entfernen, wodurch auch das Risiko von Krankheiten verringert wird. Auch zeigen Kühe, die regelmässigen Zugang zu Nutztierbürsten haben, weniger Unbehagen und Frustration durch Juckreiz. Zudem erhöht der Einsatz von Nutztierbürsten bei Milchkühen die Milchleistung messbar und die Eutergesundheit sogar deutlich.

Nutztierbürsten werden schon seit Jahren im Innen- und Aussenbereich der Tierhaltung eingesetzt. Es gibt starr installierte Bürsten, wie auch schwingende und rotierende Bürsten. Nutztierbürsten können mittels Elektromotor angetrieben sein, um den Bürsteffekt zu verbessern. Nutztierbürsten können eine oder zwei Bürsten umfassen. Bei letzterer sind die beiden Bürsten typischerweise zueinander rechtwinklig angeordnet, wobei die Bürsten in der Regel bei Tierkontakt - elektrisch angetrieben - selbständig rotieren. Dabei sind die Bürsten so angebracht, dass sie den Rücken und/oder die seitlichen Bereiche der Tiere berühren.

So offenbart die DE-U-20 2012 100 828 eine Vorrichtung zum Bürsten von Tieren, insbesondere von Nutztieren wie Rindern, Kühen, Kälbern, Schweinen, Ziegen und/oder Schafen, umfassend eine Bürsteneinheit mit mindestens einer um eine zumindest annähernd vertikal ausgerichtete Bürstenrotationsachse gelagerte und von einer Antriebseinheit antreibbare Bürste, einen mit der Bürsteneinheit verbundenen Abstützrahmen, eine mittels einer Verbindungseinheit mit dem Abstützrahmen gekoppelten Trägereinheit, wobei der Abstützrahmen gegenüber der Trägereinheit höhenverstellbar ausgebildet ist und wobei die Verbindungseinheit einen Verbindungssteg und ein in vertikaler Richtung unterhalb des ersten Verbindungsstegs angeordnetes Verbindungselement aufweist und der Verbindungssteg mit einem ersten Ende an dem Abstützrahmen oder der Trägereinheit fixiert ist und mit einem zweiten Ende um eine erste Drehachse drehbar an dem Abstützrahmen oder der Trägereinheit gelagert ist und das Verbindungselement mit einem ersten Ende an dem Abstützrahmen oder der Trägereinheit fixiert ist und mit einem zweiten Ende um eine zweite Drehachse drehbar an dem Abstützrahmen oder der Trägereinheit gelagert ist, wobei die erste Drehachse linear und weitestgehend vertikal bewegbar gelagert ist und die zweite Drehachse linear und in einem Winkel α; zu der linearen Bewegung der ersten Drehachse bewegbar gelagert ist. Die Bürstenvorrichtung weist eine Zugfeder auf, welche die Trägereinheit mit dem Abstützrahmen verbindet. Dabei hilft die Zugfeder dem Tier das Anheben der Bürste, insbesondere in vertikaler Richtung. Eine solche Bürste kann beispielhaft - mit oder ohne deren Trägereinheit - am Träger der vorliegenden Nutztierbürstenhalterung angebracht sein.

Während durch die Anwesenheit der Nutztierbürsten das Fell der Tiere an deren Rücken und Seiten täglich gereinigt wird und somit sauber ist, gilt dies nicht für die Bauchregion der Tiere. Werden die Tiere geschlachtet, werden diese jedoch anschliessend in der Bauchregion aufgeschnitten. Da der Bauch aber keine Selbstreinigung erfährt, muss der Fleischer vor oder nach der Tierschlachtung die Bauchregion zuerst reinigen, bevor er seine Tätigkeit fortsetzen kann.

Daher ist es die Aufgabe der vorliegenden Erfindung, ein Gerät bereit zu stellen, mit welchem sich die Tiere selbständig auch die Bauchregion reinigen können. Dabei soll das Gerät einfach konstruiert sein, um den Wartungsaufwand und allfällige Verschleissteile möglichst gering zu halten. So ist es vorteilhaft, wenn die Reinigung trocken erfolgt und somit ohne Waschflüssigkeit auskommt. Die Tiere sollen frei entscheiden können, wann und wie lange sie sich reinigen lassen wollen. Zudem soll das Gerät insbesondere auch für männliche Tiere geeignet sein und somit in der Fleischproduktion einsetzbar sein.

Diese Aufgabe wurde überraschenderweise gelöst mit einer Nutztierbürstenhalterung (1) mit Nutztierbürste (2) für die Selbst- und Trockenreinigung von Hals und/oder Bauch von Nutztieren wie Rindern, Kühen, Kälbern, Ziegen und Schafen, wobei die Nutztierbürste (2) mindestens eine Bürste (21) mit Grundkörper und Borsten umfasst und an einer Halterung (5) angebracht ist, wobei die Halterung (5) mit einer seitlichen Fixierung (4) verbunden ist, und die Bürste (21) horizontal oder in einem bis zu 45°, insbesondere bis 30°, zur Horizontalen geneigten Winkel an der Halterung (5), wenn vertikal ausgerichtet, befestigt ist, wobei die Halterung (5) über einen Träger (8) mit der seitlichen Fixierung (4) befestigt ist, wobei
die Halterung (5) und/oder die seitliche Fixierung (4) mit dem Träger (8) über ein Gelenk (6) verbunden ist, und eine Druckfeder, Tellerfeder, Evolutfeder oder ein Motorfahrzeugpneu am Träger (8) angebracht ist und zwischen der Halterung (5) und der seitlichen Fixierung (4) angeordnet ist, oder die Feder (7) in oder an einem Gelenk (6) angeordnet ist.

Beansprucht wird zudem auch die Verwendung der erfindungsgemässen Nutztierbürstenhalterung (1) für die Selbst- und Trockenreinigung von Hals- und/oder Bauch von Nutztieren wie Rindern, Kühen, Kälbern, Ziegen und Schafen.

Die erfindungsgemässe Nutztierbürstenhalterung (1) und deren Verwendung weisen überraschenderweise viele Vorteile auf. So können die Nutztierbürstenhalterung (1) platzsparend und praktisch an beliebigem Ort, insbesondere in einem Laufstall, in einem Freilaufstall oder auf der Weide aufgebaut und verwendet werden. Die Nutztierbürstenhalterung (1) ermöglicht es den Tieren sich selbständig den Bauch, d.h. die Unterseite der Bauchregion, sowie den seitlichen unteren Bereich der Bauchregion, d.h. des Körpers, selbständig zu scheuern und dadurch trocken zu reinigen. Die Tiere können frei entscheiden, wann und wie lange sie sich reinigen lassen wollen. Zudem ist die Nutztierbürstenhalterung (1) insbesondere auch für männliche Tiere und somit hervorragend auch in der Fleischproduktion geeignet, da neben dem Rücken und den Seiten der Tiere insbesondere auch die Bauchregion der Tiere regelmässig gereinigt werden. Besonders vorteilhaft ist, dass die Nutztierbürstenhalterung (1) die Tiere selbst und trocken reinigt, wodurch keine Waschflüssigkeit - und somit auch keine Wasserzuleitung - benötigt wird. Auch muss kein Waschwasser abgeführt werden. Da die Nutztierbürstenhalterung (1) nur wenige bewegliche Teile aufweist, ist der Verschleiss von Teilen der Halterung (1) gering und der Wartungsaufwand ist deutlich reduziert.

Versuche mit Rindern haben überraschenderweise gezeigt, dass diese Art von Selbst- und Trockenreinigung bei den Tieren äusserst beliebt ist und dass sie neben dem Bauch auch zusätzlich den Hals von sich aus regelmässig reinigen. Dies erhöht nicht nur weiter das Wohlbefinden der Tiere und reduziert Krankheiten, sondern reinigt auch den Bauch von Schmutz, Kot, Urin, Insekten und Parasiten. Dadurch müssen die Tiere direkt vor oder nach dem Schlachten in der Bauchgegend nicht oder zumindest weniger gereinigt werden. Dies reduziert sowohl den Arbeitsaufwand für den Fleischer als auch den nachfolgenden Reinigungsaufwand der Räumlichkeiten, wo eine allfällige Bauchreinigung stattfindet. Und die Trockenreinigung erfüllt ihren Zweck der Reinigung und Verbesserung des Tierwohls. Zudem vereinfacht sie die Arbeitsweise, da weder Waschflüssigkeit, Zerstäuber noch ein Vakuumsystem benötigt wird.

Wenn die Halterung (5) über den Träger (8) an der seitlichen Fixierung (4) befestigt, die Halterung (5) und/oder die seitliche Fixierung (4) mit dem Träger (8) über ein Gelenk (6) verbunden, und die Feder (7) am Träger (8) angebracht sowie zwischen der Halterung (5) und der seitlichen Fixierung (4) angeordnet ist, wird eine besonders stabile Konstruktion erhalten. Auch kann die Höhe der Nutztierbürste auf einfache Weise entweder am Träger (5) selbst und/oder mittels eines Diagonalelements (9) auf einfache Art und Weise in vertikaler Richtung angepasst werden. Auch gibt diese Konstruktion der Nutztierbürste (2) eine erhöhte seitliche Stabilität, sodass sich die Nutztierbürste (2) im Wesentlichen nur in Richtung der Fixierung (4) reversibel verschieben lässt.

Wenn die Halterung (5) über einen Träger (8) an der seitlichen Fixierung (4) befestigt, die Halterung (5) und/oder die seitliche Fixierung (4) mit dem Träger (8) über ein Gelenk (6) verbunden sowie die Feder (7) in oder an einem Gelenk (6) angeordnet ist, verbindet das Gelenk (6) den Träger (8) mit der Halterung (5) und/oder der seitlichen Fixierung (4). Dies erlaubt eine schlanke, platzsparende Konstruktion mit gegebenenfalls grösserer Auslenkung der Halterung (5) mit Bürste (2, 21, 22). Auch kann bei geeigneter Vorrichtung die Nutztierbürste (2) an der Halterung (5) in vertikaler Richtung verschoben werden, um deren Höhe an die Grösse der Tiere anzupassen.

Es wird bemerkt, dass die DD-A-100618 eine Vorrichtung zur Gesunderhaltung von Tieren beschreibt, die einen Stand zur Fixierung des Tieres sowie einen an dem Stand bewegbar angeordneten Zerstäuber einer Waschflüssigkeit sowie einen Rahmen mit drehbaren Bürsten· enthält. Der Rahmen ist aus zwei Stangen (13) ausgeführt, welche in vertikaler Ebene des Standes (1) angeordnet und miteinander starr gekoppelt sind. Zudem ist der Rahmen am Stand derart gelenkig befestigt, dass er in vertikaler Längsebene des Standes schwingende Bewegungen ausführen kann, und am unteren Ende einer jeden Stange ein Hebel befestigt, welcher die Bürsten und die Zerstäuber trägt, wobei sich die beiden Hebel gegenläufig bewegen können, wodurch bei der Fixierung des Tieres in dem Stand die vorgegebene Stellung der Bürsten unter dem Bauch des Tieres gewährleistet wird. Die Vorrichtung ist insbesondere zum Abwaschen des Euters von Tieren, beispielsweise von Kühen vor dem Melken, bestimmt mit dem Zweck, eine einwandfreie Reinigung der Tiere zur Vorbereitung des Melkens zu ermöglichen. Die offenbarte Vorrichtung ist komplex und benötigt zur Nassreinigung des Euters neben Bürsten, Zerstäuber und Waschflüssigkeit auch ein Vakuumsystem. Durch die vielen beweglichen Teile benötigt das System auch einen erheblichen Wartungsaufwand und weist viele Verschleissteile auf.

### Die Nutztierbürstenhalterung (1)

Die erfindungsgemässe Nutztierbürstenhalterung (1) mit Nutztierbürste (2) ist besonders geeignet für die Selbst- und Trockenreinigung von Hals und/oder Bauch von Nutztieren wie Rindern, Kühen, Kälbern, Ziegen und Schafen. Somit können sich die Nutztiere - auch männliche - jederzeit und solange sie möchten, reinigen - resp. reinigen lassen. Dadurch benötigt die Nutztierbürstenhalterung (1) weder Waschflüssigkeit, Zerstäuber noch ein Vakuumsystem, ist jedoch nicht geeignet für die Reinigung von Euter von weiblichen Nutztieren.

Je nach Art und Grösse der Nutztiere, d.h. Tiere, ist es vorteilhaft, eine individuell angepasste Nutztierbürstenhalterung (1) zu installieren. Denn beispielsweise Ziegen, Schafe oder Kälber unterscheiden sich nicht nur in der Grösse von ausgewachsenen Rindern, sondern auch deren Gewicht und somit ist deren Kraft unterschiedlich. Der Fachmann kennt sich in den individuell unterschiedlichen Anforderungen aus und er kann die geeignete Grösse der Nutztierbürstenhalterung (1) mit optimalem Abstand der horizontalen Bürste (21) zum Untergrund (3), wie auch die für die jeweiligen Tiere passende Feder (7) der Nutztierbürstenhalterung (1) auswählen.

Die Nutztierbürste (2) der Nutztierbürstenhalterung (1) umfasst mindestens eine Bürste (21) mit Grundkörper und Borsten, wobei die Bürste (2, 21) an der Halterung (5) angebracht, d.h. befestigt, ist. Dabei ist es vorteilhaft, wenn die Nutztierbürste (2) - insbesondere wenn diese eine rotierende Bürste (21) umfasst - mit einem Motor angetrieben wird, welcher über einen Kontaktschalter ein- und ausgeschaltet wird. Dies erleichtert die Reinigung und erhöht das Wohlfühlgefühl für die Tiere. Geeignete Bürsten (21) sind bekannt, im Handel erhältlich, sowie im Stand der Technik - beispielsweise in der vorgenannten DE-U-20 2012 100 828, offenbart.

Die Halterung (5) der Nutztierbürstenhalterung (1) ist mit der seitlichen Fixierung (4), typischerweise eine Stütze, ein Pfeiler oder eine Wand, verbunden. Zudem ist die Bürste (21) horizontal oder in einem bis zu 45°, bevorzugt bis 30°, insbesondere bis 15°, zur Horizontalen, bevorzugt nach unten, geneigten Winkel an der Halterung (5), wenn diese vertikal ausgerichtet ist, befestigt. Neigt sich die Halterung (5), beispielsweise aufgrund des Gewichts der Nutztierbürste (2), ändert sich somit automatisch auch die Ausrichtung der Bürste (21).

Der Begriff «horizontal ausgerichtete Bürste (21)» umfasst Bürsten (21), deren Grundkörper sowohl waagrecht als auch bis zu 45° zur Horizontalen, d.h. zur Waagrechten, geneigten Winkel ausgerichtet ist. Dabei ist die Bürste (21), wenn sie in einem zur Horizontalen geneigten Winkel angeordnet ist, bevorzugt nach unten geneigt, d.h., dass die Bürste (21) von der Halterung (5) ausgehend in abfallender Richtung angeordnet ist. Somit weist derjenige Teil der Bürste (21), der näher bei der Halterung (5) liegt, einen grösseren Abstand zum horizontalen Untergrund (3) auf als derjenige Teil der Bürste (21), welcher von der Halterung (5) weiter entfernt ist. Analog umfasst der Begriff «vertikal ausgerichtete Bürste (22)» Bürsten (22), deren Grundkörper vertikal, wie auch in einem Winkel von typischerweise bis zu 45° zur Vertikalen - und in Bezug auf die Halterung (5), wenn sie vertikal ausgerichtet ist - in Richtung der horizontal ausgerichteten Bürste (21) geneigt ist. Dabei ist die vertikal angeordnete Bürste (22) typischerweise rechtwinklig zur horizontal angeordneten Bürste (21) befestigt.

Dabei ist es erfindungswesentlich, dass die Halterung (5) über einen Träger (8) an der seitlichen Fixierung (4) befestigt, d.h. verbunden, insbesondere fest verbunden, ist, wobei
die Halterung (5) und/oder die seitliche Fixierung (4) mit dem Träger (8) über ein Gelenk (6) verbunden ist, und die Feder (7) am Träger (8) angebracht ist und zwischen der Halterung (5) und der seitlichen Fixierung (4) angeordnet ist, oder die Feder (7) in oder an einem Gelenk (6) angeordnet ist, wobei das Gelenk (6) den Träger (8) mit der Halterung (5) und/oder der seitlichen Fixierung (4) verbindet.

Die mindestens eine Bürste (21) der Nutztierbürstenhalterung (1) ist bevorzugt
- Eine um die eigene Achse rotierende Bürste (21), typischerweise eine elektrisch angetriebene Bürste (21), beispielsweise in Form einer Rundbürste, welche sich bei Kontakt des Tieres mit der Bürste (21) in Bewegung setzt, oder eine stationär angeordnete Bürste (21), beispielsweise eine Flachbürste, deren Borsten nach oben ausgerichtet sind. Bei rotierenden Bürsten (21) kann das Tier stationär sich schrubben lassen, während bei stationär angeordneten Bürsten (21) das Tier sich selbst durch Hin- und Herbewegen sich schrubben muss; und/oder
- Teil eines zwei-Bürstensystems mit zwei zueinander im Wesentlichen rechtwinklig angeordnete Bürsten umfassend die mindestens eine, horizontal ausgerichtete Bürste (21), welche sich von der Halterung (5) weg erstreckt, d.h. wegrichtet, und eine vertikal ausgerichtete Bürste (22), welche im Bereich der Halterung (5) und oberhalb der horizontal ausgerichteten Bürste (21) angeordnet ist. Geeignete zwei-Bürstensysteme sind zwar bekannt, werden jedoch immer umgekehrt angeordnet, d.h. die vertikal ausgerichtete Bürste sind unterhalb der horizontal ausgerichteten Bürste angeordnet. Durch die erfindungsgemässe Anordnung wird nicht nur der Bauch oder der Hals geschrubbt, sondern auch der seitliche, untere Bereich der Bauchregion, welcher mittels herkömmlicher Anordnung nicht gereinigt werden kann.

Die Nutztierbürsten (2) und Bürsten (21, 22), gemeinsam Bürsten (2, 21, 22) genannt, weisen einen festen Grundkörper auf, an welchem Borsten befestigt sind. Flachbürsten weisen im Wesentlichen nur an einer Seite Borsten auf, während Rundbürsten rund um deren Längsachsen Borsten aufweisen. Bevorzugte Bürsten (2, 21, 22) sind Rundbürsten, welche sich entlang ihrer Längsachse drehen, wobei die Bürsten (2, 21, 22) bevorzugt elektrisch angetrieben sind - beispielsweise bei Kontakt durch das Tier. Der Aussendurchmesser der Bürsten (2, 21, 22) in Form von Rundbürsten, von Borstenende zum anderen Borstenende gemessen, beträgt beispielsweise für kleinere Tiere wie Ziegen, Schafe oder Kälber ca. 20 bis 40 cm und für grosse Tiere wie Rinder ca. 60 cm bis 1.2 m, insbesondere 60 cm bis 1 m. Geeignete Bürsten (2, 21, 22) sind dem Fachmann bekannt und kommerziell erhältlich. Er kann für die entsprechenden Tiere die individuell geeigneten Bürsten (21) auswählen.

In einer bevorzugten Ausführungsform der Nutztierbürstenhalterung (1) weist die Oberkante des Grundkörpers der horizontal ausgerichteten Bürste (21) vom Untergrund (3) einen mittleren Abstand von 30 cm bis 1.5 m, bevorzugt von 0.4 bis 1 m, insbesondere von 0.4 bis 0.8 m, auf, wodurch die Bürste (21) vom Untergrund (3) so beabstandet ist, dass die Nutztiere wie Rinder, Kühe, Kälber, Ziegen und/oder Schafe mit der Bürste (21) ihren Bauch und/oder Hals reinigen können. Mit anderen Worten: Je nach Grösse der Tiere, die die Nutztierbürstenhalterung (1) benutzen sollen, ändert sich auch der Abstand der Bürste (21) zum Untergrund (3). So eignet sich ein Abstand von beispielsweise 30 cm für kleinere Tiere wie Ziegen, Schafen und Kälber, während sich ein Abstand von beispielsweise bis 1.5 m für grosse Rinder eignet, welche sich spezifisch den Hals schüren, resp. reinigen oder reiben, wollen. Dabei wird zur Bestimmung des Abstands der Bürste (21) zum Untergrund (3) die Oberkante des Grundkörpers der Bürste (21) verwendet, wobei die Oberkante beim arithmetischen Mittel der Bürstenlänge, d.h. der Rotationsachse der Bürste (21) verwendet wird. Dieser Abstand erlaubt ein optimales Scheuern des Bauchs und/oder des Hals der Tiere.

Die horizontal ausgerichtete Bürste (21) der Nutztierbürstenhalterung (1) ist, wenn sie in einem zur Horizontalen geneigten Winkel an der Halterung (5), wenn vertikal ausgerichtet, befestigt ist, bevorzugt von der Halterung (5) ausgehend in abfallender Richtung angeordnet ist. Dabei weist der Winkel bevorzugt eine Neigung zur Horizontalen von bis zu 45°, insbesondere von bis zu 30°, ganz bevorzugt von bis zu15°, auf. Dies erlaubt einen optimalen Zugang der Tiere zur Bürste (21), insbesondere bei unterschiedlicher Grösse der Tiere. Denn kleinere Tiere, deren Beine kürzer und deren Bauch näher beim Boden ist, können sich am Ende der Bürste (21) schüren, welches weiter unten und somit weiter von der Halterung (5) entfernt ist. Grössere Tiere mit längeren Beinen hingegen können sich näher zur Halterung (5) hin bewegen.

In einer bevorzugten Ausführungsform der Nutztierbürstenhalterung (1), ist, wenn die Feder (7) in oder an einem Gelenk (6) angeordnet ist, welches die Halterung (5) mit dem Träger (8) verbindet, das Gelenk (6) ein Drehgelenk (61) und die Feder (7) bevorzugt eine Schenkelfeder oder Spiralfeder darstellt, wobei die Feder (7) innerhalb und/oder ausserhalb des Gelenks (6) angeordnet sein kann.

Bei diesen Anordnungen erweisen sich die genannten Vorteile als besonders vorteilhaft.

Geeignete Gelenke (6) wie das Drehgelenk (61) und das Kugelgelenk (62) und dazu passende Federn (7) sind dem Fachmann bekannt und kommerziell erhältlich. Er kann für die optimal geeigneten Gelenke (6, 61, 62) und Federn (7) für die Nutztierbürstenhalterung (1) individuell auf die entsprechenden Tiere wie Kälber, Ziegen, Schafe und Rinder optimal auswählen.

In einer anderen bevorzugten Ausführungsform der Nutztierbürstenhalterung (1) ist die Feder (7) so ausgelegt, dass, wenn eine Kraft von 100 N auf die Achse der horizontal ausgerichteten Bürste (21) einwirkt, sich die Bürste (21) um höchstens 0.5 m in Stossrichtung bewegt. Dabei gelten diese Werte für kleinere Tiere wie Ziegen, Schafe oder junge Kälber. Wird die Nutztierbürstenhalterung (1) von grösseren - und somit auch schwereren - Tieren, wie beispielsweise ausgewachsene Rindern wie Kühen oder Bullen verwendet, ist es oft vorteilhaft, dass eine stärkere Feder gewählt wird, sodass beispielsweise bei einer Kraft von 100 N sich die Bürste (21) um lediglich höchsten 0.01 m in Stossrichtung bewegt. Der Fachmann kann geeignete Federn (7) auswählen. Dies ermöglicht es den Tieren, sich auch in seitlicher Richtung zu scheuern und dabei beispielsweise gegen eine vertikal ausgerichtete Bürste (22) zu drücken, welche dem ausgeübten Druck teilweise nachgibt. Dies erhöht das Wohlbefinden und erlaubt auch, dass Körperbereiche gescheuert werden können, welche bei statisch angeordneten Bürsten (2) nicht oder nur schwer zugänglich sind.

In einer weiteren, besonders bevorzugten Ausführungsform der Nutztierbürstenhalterung (1) umfasst diese neben der Nutztierbürste (2) und der Halterung (5) die seitliche Fixierung (4), den Träger (8) das Gelenk (6) und die Feder (7), wobei
- die Fixierung (4) am Untergrund (3) befestigt ist, wobei die Fixierung (4) bevorzugt eine Stütze, ein Pfeiler oder eine Wand darstellt,
- der Träger (8) im oberen Bereich der Fixierung (4) angebracht ist, wobei sich der Träger (8) in einem zur Horizontalen gemessenen Winkel von +/- 45°, bevorzugt +/- 30°, insbesondere +/- 15°, von der Fixierung (4) weg erstreckt,
- die Halterung (5) mittels Gelenk (6) am Ende (81) des Trägers (8), welches der Fixierung (4) entgegengesetzt ist, angebracht ist, wobei sich die Halterung (5) nach unten erstreckt und das Gelenk (6) bevorzugt ein Drehgelenk (61) ist, wobei, wenn
- die Feder (7) in oder am Gelenk (6) angeordnet ist, die Feder (7) bevorzugt eine Schenkelfeder oder Spiralfeder darstellt.

Diese Anordnung liefert eine vielseitig einsetzbare Nutztierbürstenhalterung (1), welche insbesondere freistehend auf festem Untergrund befestigt werden kann. Sie ist platzsparend, stabil und erlaubt eine optimale Befestigung der Nutztierbürste (2). Zudem erweisen sich die genannten Vorteile als besonders vorteilhaft.

In einer anderen Ausführungsform der Nutztierbürstenhalterung (1)
- ist die seitliche Fixierung (4) und/oder die Halterung (5) höhenverstellbar, beispielsweise mittels Teleskop-Elementen, die von Hand oder mechanisch auf die gewünschte Länge angepasst werden können;
- weist die Nutztierbürstenhalterung (1) ein längenverstellbares Diagonalelement (9) auf, wobei das Diagonalelement (9) am Träger (8) und an der seitlichen Fixierung (4) angebracht ist; und/oder
- sind der Träger (8) und die seitliche Fixierung (4) über ein Drehgelenk (61) miteinander verbunden, wobei zusätzlich zwischen dem Träger (8) und der seitlichen Fixierung (4) ein längenverstellbares Diagonalelement (9) angeordnet sein kann.

Diese Anordnungen erlauben auf einfache Art und Weise, dass die Nutztierbürsten (2) und somit die horizontal angeordnete Bürste (21) und, sofern vorhanden, auch die vertikal angeordnete Bürste (22), in der Höhe reversibel verstellt werden können. Dies erlaubt nicht nur eine optimale Höheneinstellung für die Tiere, sondern auch dass die gleiche Nutztierbürstenhalterung (1) für verschieden grosse Tiere, beispielsweise sowohl für Rinder als auch für Kälber, Ziegen oder Schafe, verwendet werden können. Dadurch kann die Nutztierbürstenhalterung (1) auch dem Wachstum von Jungtieren, beispielsweise Kälber, regelmässig angepasst werden.

Dabei ist das Diagonalelement (9) der Nutztierbürstenhalterung (1), mit welchem die Neigung des Trägers und somit der Abstand der horizontal angeordneten Bürste (21) zum Untergrund (3), bevorzugt ein hydraulisch, mechanisch oder pneumatisch verstellbares, d.h. in dessen Längsrichtung verlänger- resp. verkürzbares, Diagonalelement (9). Nicht-limitierende Beispiele geeigneter Diagonalelemente (9) umfassen Zahnstangengewinde, beispielsweise in Form eines Kniehebel-Mechanismus wie Scherenwagenheber und/oder Hydraulikheber.

In einer anderen bevorzugten Ausführungsform der Nutztierbürstenhalterung (1) kann mittels Verstellen des Diagonalelements (9) der Winkel des Träger (8) im Bereich von +/- 45°, bevorzugt +/- 30°, insbesondere +/- 15°, relativ zur Horizontalen, verändert werden. Dadurch kann die Distanz der horizontal angeordneten Bürste (21) zum Untergrund (3) einfach und optimal eingestellt werden.

### Die Verwendung

Die erfindungsgemässe Nutztierbürstenhalterung (1) wird insbesondere für die Selbst- und Trockenreinigung von Hals- und Bauch von Rindern, Ziegen und Schafen, sowie gegebenenfalls die seitlichen unteren Bereiche der Bauchregion, verwendet.

Es werden folgende Bezugszeichen verwendet:
- 1: Nutztierbürstenhalterung
- 2: Nutztierbürste
21 horizontal ausgerichtete Bürste
22 vertikal ausgerichtete Bürste
- 3: Untergrund
- 4: seitlichen Fixierung
- 5: Halterung
- 6: Gelenk
61 Drehgelenk
62 Kugelgelenk
- 7: Feder
- 8: Träger
81 Ende des Trägers (8)
- 9: längenverstellbares Diagonalelement

Im Folgenden werden nicht-limitierende, bevorzugte Ausführungsformen der erfindungsgemässen Nutztierbürstenhalterung (1) mit Nutztierbürste (2) anhand der nachfolgenden Zeichnungen beschrieben. Diese sind nicht einschränkend auszulegen und werden als Bestandteil der Beschreibung verstanden:

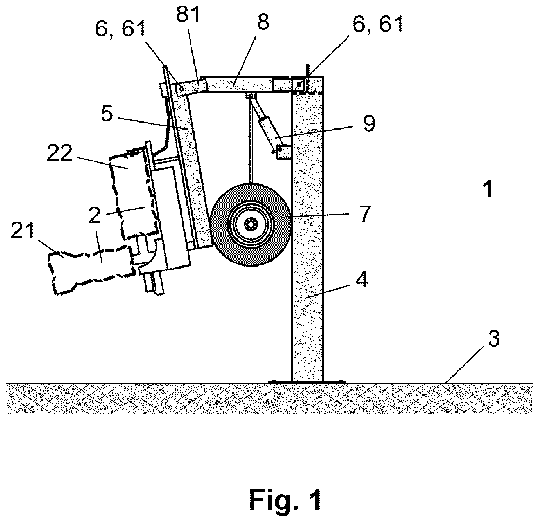

- Fig. 1: offenbart eine bevorzugte, beispielhafte Ausführungsform der erfindungsgemässen Nutztierbürstenhalterung (1). Sie umfasst neben der Nutztierbürste (2), welche als 2-Bürstensystems ausgebildet ist, und der Halterung (5) die seitliche Fixierung (4) in Form einer Stütze, wobei diese am Untergrund (3) befestigt ist. Im oberen Bereich der Fixierung (4) ist diese mit dem Träger (8) über ein Drehgelenkt (6, 61) verbunden. Der Träger (8) ist beispielhaft waagrecht angeordnet. Am anderen Ende des Trägers (8) befindet sich das Ende (81) des Trägers (8), welches beispielhaft als separates Element, aber zum Träger (8) gehörend, leicht abfallend auf einer Seite fest mit dem Träger (8) verbunden ist. An der anderen Seite ist die Halterung (5) mit dem Ende (81) des Trägers (8) über ein Drehgelenk (6, 61) verbunden, wobei bei der dargestellten Ausführungsform das Drehgelenk (6, 61) keine Feder (7) aufweist.
Die am Ende (81) des Trägers (8) angebrachte Halterung (5) erstreckt sich schräg in Richtung Fixierung (4) nach unten. Im unteren Bereich der Halterung (5), auf der Seite welche der Fixierung (4) abgewandt ist, ist die Bürste (21) horizontal an Halterung (5), wenn sie vertikal ausgerichtet ist, angebracht, wobei sich die Bürste (21) von der Halterung (5) weg erstreckt. Die dargestellte Nutztierbürste (2) umfasst zudem - bei vertikaler Anordnung der Halterung (5) - eine vertikal ausgerichtete Bürste (22), welche rechtwinklig zur Bürste (21) und im Bereich der Halterung (5) und oberhalb der horizontal ausgerichteten Bürste (21) angeordnet ist. Die dargestellte Nutztierbürste (2) ist ein kommerziell erhältliches zwei-Bürstensystem, welches in umgekehrter Anordnung, d.h. die vertikale angeordnete Bürste (22) befindet sich oberhalb und nicht unterhalb der horizontal angeordneten Bürste (21), an der Halterung (5) befestigt ist, wodurch bequem sowohl die Unterseite des Bauchs der Tiere von unten als auch die untere seitliche Seite des Bauchs auf einfache Art und Weise gescheuert werden kann.
Dabei ist die Halterung (5) über den Träger (8) an der seitlichen Fixierung (4) befestigt, wobei die Halterung (5) und/oder die seitliche Fixierung (4) mit dem Träger (8) über das Gelenk (6) verbunden ist. Die Feder (7) ist am Träger (8) angebracht und zwischen der Halterung (5) und der seitlichen Fixierung (4) angeordnet. Das Gewicht der Nutztierbürste (2) drückt die Halterung (5) nach innen in Richtung Fixierung (4). Zwischen dem unteren Bereich der Halterung (5) und der Fixierung (4) ist die Feder (7), beispielhaft in Form eines Autopneus mit Radfelge, d.h. ein Rad eines Autos, angeordnet. Dabei ist das Rad über eine Stange, die vertikal nach oben führt, mit dem Träger (8) befestigt, jedoch nicht mit der Halterung (5) resp. der Fixierung (4).
Im oberen Bereich der Fixierung (4) ist zudem ein längenverstellbares Diagonalelement (9) angeordnet, welches die Fixierung (4) mit dem Träger (8) verbindet. Wenn nun die Länge des Diagonalelements (9) verstellt wird, ändert sich der Neigungswinkel des Trägers (8), da dieser lediglich über das Drehgelenkt (6, 61) mit der Fixierung (4) verbunden ist. Durch Verstellen der Länge des Diagonalelements (9) ändert sich auch der Abstand der Nutztierbürste (2), insbesondere der im Wesentlichen horizontal ausgerichtete Bürste (21), zum Untergrund (3). Somit lässt sich die Höhe ab Untergrund (3) der Nutztierbürste (2) auf einfache Art und Weise für die jeweiligen Tiere anpassen.

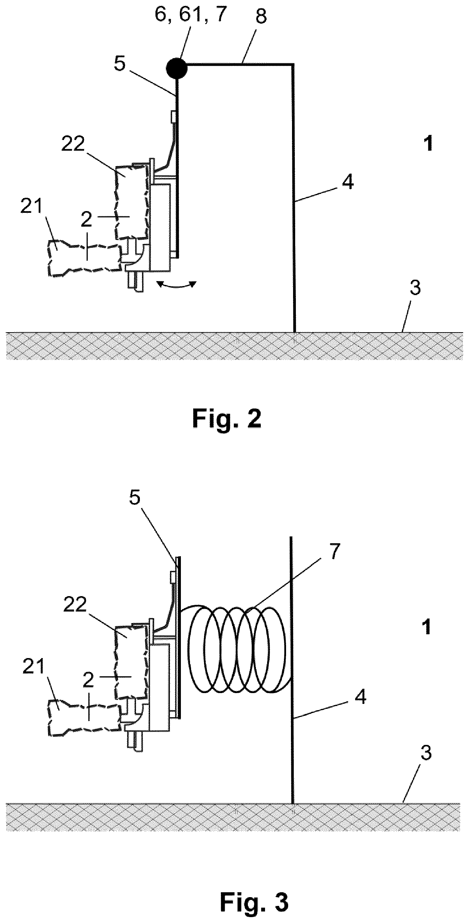

- Fig. 2: zeigt schematisch und analog zu Fig. 1 eine Nutztierbürstenhalterung (1), wobei die Halterung (5) mit der Nutztierbürste (2), welche als 2-Bürstensystem ausgebildet ist, mit dem Träger (8) über ein Gelenk (6) verbunden ist. Dabei ist die Halterung (5) über den Träger (8) an der seitlichen Fixierung (4) befestigt, wobei die Halterung (5) und/oder die seitliche Fixierung (4) mit dem Träger (8) über das Gelenk (6) verbunden ist, wobei die Feder (7) in oder am Gelenk (6) angeordnet ist und das Gelenk (6) den Träger (8) mit der Halterung (5) und/oder der seitlichen Fixierung (4) verbindet. Das Gelenk (6) ist beispielhaft als Drehgelenk (61) mit Feder (7) ausgebildet, wobei auch anstelle des Drehgelenks (61) ein Kugelgelenk (62) mit Feder (7) denkbar ist. Die Feder (7) ist so ausgelegt, dass, wenn eine Kraft von 100 N auf die Achse der horizontal ausgerichteten Bürste (21) einwirkt, sich die Bürste (21) um höchstens 0.5 m in Stossrichtung bewegt. Die Darstellung zeigt, dass die Auslegung der Feder (7) abhängig von der spezifischen Konstruktion der Nutztierbürstenhalterung (1) ist, d.h. die Feder (7) muss - aufgrund des Hebelgesetzes - in Abhängigkeit der Länge der Halterung (5) eine unterschiedliche Federkraft aufweisen, um bei einer Kraft von 100 N die gleiche Auslenkung der Bürste (21) zu erhalten. Durch diese Ausführungsform kann sich die Halterung (5) - und somit auch die Nutztierbürste (2) - bewegen, wenn ein seitlicher Druck auf die Halterung (5) - beispielsweise durch Scheuern eines Tiers an der Bürste (22) - ausgeübt wird.
Der Träger (8) ist an der dem Gelenk (6) gegenüberliegenden Seite mit der seitlichen Fixierung (4), welche am Untergrund (3) befestigt ist, verbunden.
Der Zwischenraum zwischen der Halterung (5) und der seitlichen Fixierung (4) kann offen und frei zugänglich sein, wodurch Tiere dazwischen durchgehen können. Dabei ist es hilfreich, wenn der Träger (8) - und somit der genannte Zwischenraum - genügend gross sind, dass sich die Tiere nicht einklemmen oder verletzen. Alternativ wird der Zwischenraum abgedeckt und somit der Zugang für die Tiere verschlossen.
- Fig. 3: zeigt schematisch eine weitere, beispielhafte Ausführungsform einer nicht erfindungsgemässen Nutztierbürstenhalterung (1). Sie umfasst die Nutztierbürste (2) mit der horizontal (21) und vertikal (22) ausgerichteten Bürste, wobei die Nutztierbürste (2) an der Halterung (5) befestigt ist. Diese ist lediglich mit der Feder (7) mit der seitlichen Fixierung (4) in Form einer Stütze oder Wand verbunden. Die Fixierung (4) ist am Untergrund (3) befestigt. Somit ist die Halterung (5) über die Feder (7) an der seitlichen Fixierung (4) befestigt, wobei die Feder (7) auf gleicher Höhe sowohl mit der Halterung (5) wie auch mit der seitlichen Fixierung (4) verbunden ist, sodass die Feder (7) bei vertikaler Anordnung der Halterung (5) und der seitlichen Fixierung (4) bei symmetrischer Kompression oder Dehnung in horizontaler Richtung komprimiert und gedehnt wird.

## Patentansprüche

1. Nutztierbürstenhalterung (1) mit Nutztierbürste (2) für die Selbst- und Trockenreinigung von Hals und/oder Bauch von Nutztieren wie Rindern, Kühen, Kälbern, Ziegen und Schafen, wobei die Nutztierbürste (2) mindestens eine Bürste (21) mit Grundkörper und Borsten umfasst und an einer Halterung (5) angebracht ist, wobei die Halterung (5) mit einer seitlichen Fixierung (4) verbunden ist, und die Bürste (21) horizontal oder in einem bis zu 45°, insbesondere bis 30°, zur Horizontalen geneigten Winkel an der Halterung (5), wenn diese entlang der Vertikalen ausgerichtet ist, befestigt ist, wobei die Halterung (5) über einen Träger (8) an der seitlichen Fixierung (4) befestigt ist, wobei die Halterung (5) und/oder die seitliche Fixierung (4) mit dem Träger (8) über ein Gelenk (6) verbunden ist, **dadurch gekennzeichnet, dass** eine Druckfeder, Tellerfeder, Evolutfeder oder ein Motorfahrzeugpneu am Träger (8) angebracht ist und zwischen der Halterung (5) und der seitlichen Fixierung (4) angeordnet ist, oder dass eine Feder (7) in oder an dem Gelenk (6) angeordnet ist.

2. Nutztierbürstenhalterung (1) nach Anspruch 1, **dadurch gekennzeichnet, dass** die mindestens eine Bürste (21)
- eine um die eigene Achse rotierende Bürste (21) oder eine stationär angeordnete Bürste (21) ist, deren Borsten nach oben ausgerichtet sind, und/oder
- Teil eines zwei-Bürstensystems ist mit zwei zueinander im Wesentlichen rechtwinklig angeordnete Bürsten umfassend die mindestens eine, horizontal ausgerichtete Bürste (21), welche sich von der Halterung (5) weg erstreckt, und eine vertikal ausgerichtete Bürste (22), welche im Bereich der Halterung (5) und oberhalb der horizontal ausgerichteten Bürste (21) angeordnet ist.

3. Nutztierbürstenhalterung (1) nach mindestens einem der Ansprüche 1 bis 2, **dadurch gekennzeichnet, dass**, wenn sich die Bürste (21) in einem zur Horizontalen geneigten Winkel an der Halterung (5), wenn vertikal ausgerichtet, befestigt ist, von der Halterung (5) ausgehend in abfallender Richtung angeordnet ist, wobei der Winkel bevorzugt eine Neigung zur Horizontalen von bis zu 45°, insbesondere von bis zu 30°, ganz bevorzugt von bis zu 15°, aufweist.

4. Nutztierbürstenhalterung (1) nach mindestens einem der Ansprüche 1 bis 3, **dadurch gekennzeichnet, dass** die Feder (7) in oder an dem Gelenk (6) angeordnet ist, welches die Halterung (5) mit dem Träger (8) verbindet, wobei das Gelenk (6) ein Drehgelenk (61) und die Feder (7) bevorzugt eine Schenkelfeder oder Spiralfeder darstellt.

5. Nutztierbürstenhalterung (1) nach mindestens einem der Ansprüche 1 bis 4, **dadurch gekennzeichnet, dass**
- die Fixierung (4) an einem Untergrund (3) befestigt ist, wobei die Fixierung (4) bevorzugt eine Stütze, ein Pfeiler oder eine Wand darstellt,
- der Träger (8) im oberen Bereich der Fixierung (4) angebracht ist, wobei sich der Träger (8) in einem zur Horizontalen gemessenen Winkel von +/- 45°, bevorzugt +/- 30°, insbesondere +/-15°, von der Fixierung (4) weg erstreckt, sowie
- die Halterung (5) mit dem Gelenk (6) am Ende (81) des Trägers (8), welches der Fixierung (4) entgegengesetzt ist, angebracht ist, wobei sich die Halterung (5) nach unten erstreckt und das Gelenk (6) bevorzugt ein Drehgelenk (61) ist, wobei
- wenn in oder am Gelenk (6) die Feder (7) angeordnet ist, die Feder (7) bevorzugt eine Schenkelfeder oder Spiralfeder darstellt.

6. Nutztierbürstenhalterung (1) nach Anspruch 5, **dadurch gekennzeichnet, dass** die Oberkante des Grundkörpers der Bürste (21) von dem Untergrund (3) einen mittleren Abstand von 30 cm bis 1.5 m, bevorzugt von 0.4 bis 1 m, insbesondere von 0.4 bis 0.8 m, aufweist, wodurch die Bürste (21) vom Untergrund (3) so beabstandet ist, dass die Nutztiere mit der Bürste (21) ihren Bauch und/oder Hals reinigen können.

7. Nutztierbürstenhalterung (1) nach Anspruch 5 oder 6, **dadurch gekennzeichnet, dass**
- die seitliche Fixierung (4) und/oder die Halterung (5) höhenverstellbar sind,
- die Nutztierbürstenhalterung (1) ein längenverstellbares Diagonalelement (9) aufweist, wobei das Diagonalelement (9) am Träger (8) und an der seitlichen Fixierung (4) angebracht ist, und/oder
- der Träger (8) und die seitliche Fixierung (4) über das Drehgelenk (61) miteinander verbunden sind, wobei zusätzlich zwischen dem Träger (8) und der seitlichen Fixierung (4) ein längenverstellbares Diagonalelement (9) angeordnet sein kann.

8. Nutztierbürstenhalterung (1) nach Anspruch 7, **dadurch gekennzeichnet, dass** das Diagonalelement (9) ein hydraulisch, mechanisch oder pneumatisch verstellbares Diagonalelement (9) ist.

9. Nutztierbürstenhalterung (1) nach Anspruch 7 oder 8, **dadurch gekennzeichnet, dass** mittels Verstellen des Diagonalelements (9) der Winkel des Träger (8) im Bereich von +/- 45°, bevorzugt +/- 30°, insbesondere +/- 15°, relativ zur Horizontalen, verändert werden kann, wodurch die Distanz der Bürste (21) zum Untergrund (3) optimal eingestellt werden kann.

10. Nutztierbürstenhalterung (1) nach mindestens einem der Ansprüche 1 bis 9, **dadurch gekennzeichnet, dass** die Feder (7) so ausgelegt ist, dass, wenn eine Kraft von 100 N auf die Achse der horizontal ausgerichteten Bürste (21) einwirkt, sich die Bürste (21) um höchstens 0.5 m in Stossrichtung bewegt.

11. Verwendung der Nutztierbürstenhalterung (1) nach mindestens einem der Ansprüche 1 bis 10 für die Selbst- und Trockenreinigung von Hals- und/oder Bauch von Nutztieren wie Rindern, Kühen, Kälbern, Ziegen und Schafen.

## Claims

1. A livestock brush holder (1) with a livestock brush (2) for the self- and dry cleaning of the neck and/or stomach of livestock such as cattle, cows, calves, goats and sheep, wherein the livestock brush (2) comprises at least one brush (21) with a base body and bristles, and is secured to a holder (5), wherein the holder (5) is connected with a lateral fixation (4), and the brush (21) is fastened to the holder (5) horizontally or at an angle inclined relative to the horizontal by up to 45°, in particular up to 30°, if the latter is aligned along the vertical, wherein the holder (5) is fastened to a carrier (8) on the lateral fixation (4), wherein the holder (5) and/or the lateral fixation (4) is connected with the carrier (8) via a joint (6), **characterized in that** a pressure spring, plate spring, evolute spring or a motor vehicle tire is secured to the carrier (8), and arranged between the holder (5) and the lateral fixation (4), or that a spring (7) is arranged in or on the joint (6).

2. The livestock brush holder (1) according to claim 1, **characterized in that** the at least one brush (21)
- is a brush (21) that rotates around its own axis or a stationarily arranged brush (21), the bristles of which are upwardly aligned, and/or
- is part of a two-brush system with two brushes arranged essentially at a right angle to each other, comprising the at least one horizontally aligned brush (21), which extends away from the holder (5), and a vertically aligned brush (22), which is arranged in the area of the holder (5) and above the horizontally aligned brush (21).

3. The livestock brush holder (1) according to at least one of claims 1 to 2, **characterized in that**, if the brush (21) is fastened to the holder (5) at an angle inclined to the horizontal when vertically aligned, is arranged proceeding from the holder (5) in a downward direction, wherein the angle preferably has an inclination to the horizontal of up to 45°, in particular of up to 30°, very preferably of up to 15°.

4. The livestock brush holder (1) according to at least one of claims 1 to 3, **characterized in that** the spring (7) is arranged in or on the joint (6), which connects the holder (5) with the carrier (8), wherein the joint (6) is a swivel joint (61) and the spring (7) preferably constitutes a torsion spring or coil spring.

5. The livestock brush holder (1) according to at least one of claims 1 to 4, **characterized in that**
- the fixation (4) is fastened to a substrate (3), wherein the fixation (4) preferably constitutes a support, a pillar or a wall,
- the carrier (8) is secured in the upper area of the fixation (4), wherein the carrier (8) extends away from the fixation (4) at an angle measured to the horizontal of +/- 45°, preferably of +/- 30°, in particular of +/- 15°, and that
- the holder (5) with the joint (6) is secured to the end (81) of the carrier (8) opposing the fixation (4), wherein the holder (5) extends downwardly, and the joint (6) is preferably a swivel joint (61), wherein
- if the spring (7) is arranged in or on the joint (6), the spring (7) preferably constitutes a torsion spring or coil spring.

6. The livestock brush holder (1) according to claim 5, **characterized in that** the upper edge of the base body of the brush (21) has an average distance from the substrate (3) of 30 cm to 1.5 m, preferably of 0.4 to 1 m, in particular of 0.4 to 0.8 m, so that the brush (21) is spaced apart from the substrate (3) in such a way that the livestock can clean their stomach and/or neck with the brush (21).

7. The livestock brush holder (1) according to claim 5 or 6, **characterized in that**
- the lateral fixation (4) and/or the holder (5) are height-adjustable,
- the livestock brush holder (1) has a length-adjustable diagonal element (9), wherein the diagonal element (9) is secured to the carrier (8) and to the lateral fixation (4), and/or
- the carrier (8) and the lateral fixation (4) are connected with each other via the swivel joint (61), wherein a length-adjustable diagonal element (9) can additionally be arranged between the carrier (8) and the lateral fixation (4).

8. The livestock brush holder (1) according to claim 7, **characterized in that** the diagonal element (9) is a hydraulically, mechanically or pneumatically adjustable diagonal element (9).

9. The livestock brush holder (1) according to claim 7 or 8, **characterized in that** the diagonal element (9) can be adjusted to alter the angle of the carrier (8) within a range of +/- 45°, preferably of +/- 30°, in particular of +/- 15° relative to the horizontal, so that the distance between the brush (21) and substrate (3) can be optimally set.

10. The livestock brush holder (1) according to at least one of claims 1 to 9, **characterized in that** the spring (7) is designed in such a way that, when a force of 100 N acts on the axis of the horizontally aligned brush (21), the brush (21) moves by at most 0.5 m in the impact direction.

11. Use of the livestock brush holder (1) according to at least one of claims 1 to 10 for the self- and dry cleaning of the neck and/or stomach of livestock, such as cattle, cows, calves, goats and sheep.

## Revendications

1. Support de brosse (1) pour animaux de rente, pourvu d'une brosse (2) pour animaux de rente pour l'autonettoyage et le nettoyage à sec du cou et / ou du ventre d'animaux de rente, tel que des boeufs des vaches, des chèvres et des moutons, la brosse (2) pour animaux de rente comprenant au moins une brosse (21) dotée d'un corps de base et de poils et étant montée sur un support (5), le support (5) étant relié avec une fixation (4) latérale et la brosse (21) étant fixée à l'horizontale ou sous un angle incliné de jusqu'à 45°, notamment de jusqu'à 30° par rapport à l'horizontale sur le support (5), lorsque celui-ci est orienté le long de la verticale, le support (5) étant fixé par l'intermédiaire d'un porteur (8) sur la fixation (4) latérale, le support (5) et / ou la fixation (4) latérale étant relié(e) avec le porteur (8) par l'intermédiaire d'une articulation (6), **caractérisé en ce qu'**un ressort de compression, une rondelle-ressort, un ressort évolutif ou un pneu d'engin motorisé est monté sur le porteur (8) et est placé entre le support (5) et la fixation (4) latérale ou **en ce qu'**un ressort (7) est placé dans ou sur l'articulation (6).

2. Support de brosse (1) pour animaux de rente selon la revendication 1, **caractérisé en ce que** l'au moins une brosse (21)
- est une brosse (21) en rotation autour de son propre axe ou une brosse (21) placée de manière stationnaire dont les poils sont orientés vers le haut et / ou
- est une partie d'un système à deux brosses, pourvu de deux brosses placées sensiblement à angle droit l'une par rapport à l'autre, comprenant l'au moins une brosse (21) orientée à l'horizontale, laquelle s'étend en éloignement du support (5) et une brosse (22) orientée à la verticale, laquelle est placée dans la zone du support (5) et au-dessus de la brosse (21) orientée à l'horizontale.

3. Support de brosse (1) pour animaux de rente selon au moins l'une quelconque des revendications 1 à 2, **caractérisé en ce que**, lorsque la brosse (21) est fixée sous un angle incliné vers l'horizontale sur le support (5), lorsqu'il est orienté à la verticale, dans une direction décroissante en partant du support (5), l'angle présentant de préférence une inclinaison par rapport à l'horizontale de jusqu'à 45°, notamment de jusqu'à 30°, de manière particulièrement préférentielle, de jusqu'à 15°.

4. Support de brosse (1) pour animaux de rente selon au moins l'une quelconque des revendications 1 à 3, **caractérisé en ce que** le ressort (7) est placé dans ou sur l'articulation (6), laquelle relie le support (5) avec le porteur (8), l'articulation (6) constituant une articulation rotative (61) et le ressort (7) constituant de préférence un ressort à branche ou un ressort hélicoïdal.

5. Support de brosse (1) pour animaux de rente selon au moins l'une quelconque des revendications 1 à 4, **caractérisé en ce que**
- la fixation (4) est fixée sur un fond inférieur (3), le porteur (8) est monté dans la zone supérieure du support (4),
- le porteur (8) est monté dans la zone supérieure de la fixation (4), le porteur (8) s'étendant en éloignement de la fixation (4) sous un angle de +/- 45°, de préférence de +/- 30°, notamment de +/- 15°, mesuré par rapport à l'horizontale, et
- le support (5) est monté par l'articulation (6) sur l'extrémité (81) du porteur (8) laquelle est opposée à la fixation (4), le support (5) s'étendant vers le bas et l'articulation (6) étant de préférence une articulation rotative (61),
- lorsque le ressort (7) est placé dans ou sur l'articulation (6), le ressort (7) constitue de préférence un ressort à branche ou un ressort hélicoïdal.

6. Support de brosse (1) pour animaux de rente selon la revendication 5, **caractérisé en ce que** l'arête supérieure du corps de base de la brosse (21) comporte par rapport au fond inférieur (3) un écart moyen de 30 cm à 1.5 m, de préférence de 0.4 à 1 m, notamment de 0.4 à 0.8 m, suite à quoi, la brosse (21) est écartée du fond inférieur (3) de telle sorte que les animaux de rente puissent nettoyer leur ventre et / ou leur cou avec la brosse (21).

7. Support de brosse (1) pour animaux de rente selon la revendication 5 ou 6, **caractérisé en ce que**
- la fixation (4) latérale et / ou le support (5) sont réglables en hauteur,
- le support de brosse (1) pour animaux de rente comporte un élément en diagonale (9) réglable en longueur, l'élément en diagonale (9) étant monté sur le porteur (8) et sur la fixation (4) latérale, et / ou
- le porteur (8) et la fixation (4) latérale sont reliés l'un à l'autre par l'intermédiaire de l'articulation rotative (61), additionnellement, un élément en diagonale (9) réglable en longueur pouvant être placé entre le porteur (8) et la fixation (4) latérale.

8. Support de brosse (1) pour animaux de rente selon la revendication 7, **caractérisé en ce que** l'élément en diagonale (9) est un élément en diagonale (9) ajustable par moyen hydraulique, mécanique ou pneumatique.

9. Support de brosse (1) pour animaux de rente selon la revendication 7 ou 8, caractérisé en ce par ajustage de l'élément en diagonale (9), l'angle du porteur (8) peut se modifier dans l'ordre de +/- 45°, de préférence de +/- 30°, notamment de +/- 15° par rapport à l'horizontale, suie à quoi, la distance entre la brosse (21) et le fond inférieur (3) peut se régler de manière optimale.

10. Support de brosse (1) pour animaux de rente selon au moins l'une quelconque des revendications 1 à 9, **caractérisé en ce que** le ressort (7) est conçu de telle sorte, que lorsqu'une force de 100 N agit sur l'axe de la brosse (21) orientée à l'horizontale, la brosse (21) se déplace d'un maximum de 0.5 m dans la direction de poussée.

11. Utilisation du support de brosse (1) pour animaux de rente selon au moins l'une quelconque des revendications 1 à 10 pour l'autonettoyage et le nettoyage à sec du cou et / ou du ventre d'animaux de rente, tel que des boeufs des vaches, des chèvres et des moutons.
